# EUROPEAN PATENT APPLICATION

(11) **EP 4 683 287 A1**
(43) Date of publication of application: **21.01.2026**
(21) Application number: 25172667.5
(22) Date of filing: 25.04.2025
(51) Int. Cl.: H04L 41/14, H04L 41/00, H04L 43/00, H04L 43/50, H04L 41/046, H04L 41/0631, H04L 41/0654, H04L 43/065, H04L 43/08, H04L 43/10

(54) **DOWNLOADABLE NETWORK TESTS FOR VIRTUAL CLIENT FUNCTIONS**

(30) Priority: 15.05.2024 IN 202441038170; 27.03.2025 US 202519093141
(71) Applicant: Juniper Networks, Inc., Sunnyvale, CA 94089 (US)
(72) Inventor: SINGH, Gurpreet, Sunnyvale CA 94089 (US); WU, Xiaoying, Sunnyvale CA 94089 (US); KUMKAR, Prathamesh Dnyanesh, Sunnyvale CA 94089 (US)
(74) Representative: D Young & Co LLP

(57) **Abstract**

Techniques are disclosed for sending downloadable software packages that may be executed to perform tests of a network device without requiring the network device to update firmware. In one example, the network device obtains a software package comprising instructions for simulating a network instance and stores the software package in a volatile memory of the network device. The network device simulates, based on the instructions, the network instance to obtain data indicative of a performance of the network instance. The network device sends, via a communication channel established with a network management system (NMS) based on the software package, the data indicative of the performance of the network instance. In some examples, the NMS uses the data indicative of the performance of the network instance to identify a root cause of a failure of the network device or a remedial action to be performed upon the network device.

## Description

This application claim priority to U.S. Application 19/093,141, filed March 27, 2025, which claims the benefit of India Application No. 202441038170, which was filed on May 15, 2024, the entire content of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

### SUMMARY

Particular aspects are set out in the appended independent claims. Various optional embodiments are set out in the dependent claims. In general, this disclosure describes techniques for sending, to a network device, downloadable software packages that may be executed to perform tests of the network device without requiring the updating of firmware executed by the network device. In one example, a network management system (NMS) identifies a triggering event associated with a network device of a plurality of network devices managed by the network management system. Based at least in part on the identified triggering event, the NMS selects a software package that comprises instructions for the network device to simulate a network instance. The NMS sends, to the network device (or the network device obtains from the NMS), the selected software package.

The network device obtains the software package comprising instructions for the network device to simulate the network instance and stores the software package in a volatile memory of the network device. The network device simulates, based on the instructions, the network instance to obtain data indicative of a performance of the network instance. The network device sends, via a communication channel established with the NMS based on the software package, the data indicative of the performance of the network instance. In some examples, the NMS uses the data indicative of the performance of the network instance to identify a root cause of a failure of the network device or a remedial action to be performed upon the network device.

The techniques of this disclosure provide one or more technical advantages and practical applications. For example, the techniques of the disclosure may enable the dynamic deployment of downloadable network performance modules that configure network devices of an enterprise network to perform network functions, such as network tests, without the need for installation of firmware that would ordinarily disrupt the network. Furthermore, the techniques of the disclosure may enable a network device to download and execute software modules enabling functionality for network testing for which the network device was previously unable to perform, without requiring the network device to update or reinstall firmware, an operating system, reboot or restart the network device, or interrupt the forwarding of network traffic. Because such a network device may obviate the need to reinstall or update firmware to perform such network tests, a network device as described herein may enable the more widespread implementation of network testing without imposing significant administrative overhead to update such devices or imposing additional network downtime to perform such network tests. Accordingly, the techniques of the disclosure may enhance the ability of a network device to perform network performance monitoring, troubleshooting, diagnosis, analysis, and failure remediation without causing interruption to the ordinary operation of the network or forwarding of network traffic.

In one example, the disclosure describes a network device comprising: a volatile memory; and processing circuitry in communication with storage media, the processing circuity configured to: obtain a software package comprising instructions for simulating a network instance; store the software package in the volatile memory; simulate, based on the instructions specified by the software package, the network instance to obtain data indicative of a performance of the network instance; and send, via a communication channel established with a network management system (NMS) based on the software package, the data indicative of the performance of the network instance.

In another example, the disclosure describes a network management system (NMS) comprising: processing circuitry in communication with storage media, the processing circuity configured to: identify a triggering event associated with a network device of a plurality of network devices managed by the network management system; based at least in part on the identified triggering event, select a software package from a plurality of software packages, the selected software package comprising instructions for simulating a network instance; and send, to the network device, the selected software package to cause the network device to simulate the network instance to obtain data indicative of a performance of the network instance.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system configured to provide a downloadable software package to perform a testing function or other function to monitor the performance of a network, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a flow chart illustrating an example operation of providing a downloadable software package to perform a testing function or other function to monitor the performance of a network, in accordance with one or more techniques of this disclosure.

### DETAILED DESCRIPTION

Techniques are disclosed for providing a downloadable software package that comprises instructions for causing a network device to perform a testing function or other function to monitor the performance of a network (collectively referred to herein as a "network performance monitoring function"), without requiring the network device to reinstall or update firmware or an operating system executed by the network device. The downloadable software package may be referred to herein as a "network performance monitoring module" or "downloadable mini." As one example, the software package may cause a network device (e.g., access point, router, switch, etc.) to simulate a network instance. In some examples, the network device simulates an operation of one or more client devices accessing the network via the network device. The network device collects data associated with the simulated network instance which may be sent to a network management system (NMS) configured to manage network devices of the network. The NMS may use the data associated with the simulated network instance to analyze the performance of the network and/or the network device.

In some examples, a network device may obtain the downloadable software package from the NMS or a server storing the downloadable software package. The instructions may specify, for example, a network performance monitoring function (e.g., a particular type of network test, type of data to be collect and/or measure, etc.) to be performed by the network device, instructions to configure a communication channel to communicate data collected by the network device to the NMS, and/or a data format for communicating the collected data (e.g., JSON). The data format may specify, for example, a payload of a message that includes information such as a name of the network performance monitoring function, an identifier of the network performance monitoring function, one or more categories for the collected data (e.g., Kafka topic), and/or the values of the collected data (e.g., latency, jitter, packet loss, etc.).

The network device installs the downloadable software package, for example, in a random access memory (RAM) file system ("ramfs") or other volatile memory, as a temporarily file (e.g., tmp). An administrator or user of the network device may invoke the downloadable network performance monitoring module via, for example, a command-line interface (CLI) or other interface. The administrator or user may specify a triggering command for the downloadable network performance monitoring module that specifies, for example, an identifier of the network performance monitoring function, a name of the network performance monitoring function, one or more categories for the collected data (e.g., Kafka topic), a schedule to perform the network performance monitoring function (e.g., frequency of performing the test), network configurations (e.g., VLANs) to perform the network performance monitoring function, and/or resource requirements to perform the network performance monitoring function (e.g., memory and/or CPU limitations), or other information to perform the network performance monitoring function.

The network device may perform the network performance monitoring function and collect data associated with the performance of the network performance monitoring function. For example, the network device may simulate a network instance in which a synthetic client device performs a network function (e.g., request access to an application server in the network) and may generate a report of collected data associated with the network function. The report may represent a JSON file that specifies values of the collected data. As one example, the network device may perform a speed test by sending and receiving network traffic to and from a test server and measuring download and upload speeds of the network traffic (e.g., latency, round-trips per minute (rpm), throughput, etc.) and may generate a report specifying the measured download and upload speeds. As another example, the network device may perform a continuous ping to a particular destination (e.g., domain and/or server) by measuring round-trip times (RTT) of network traffic communicated from the network device (e.g., average RTT, maximum RTT, minimum RTT, ping count, ping interval, ping request size, ping domain, packet loss percentage, number of packets received, number of packets transmitted, etc.). The network functions described above are merely some examples of functions performed by the downloadable network performance modules. The downloadable software package alternatively, or additionally, may include instructions to perform other functions typically performed by the NMS, such as specifying AI/ML models to enable the network device to examine collected data locally at the enterprise network. In some examples, the report may additionally, or alternatively, specify information about the downloadable network performance modules that are active and/or installed on the network device, such as runtime statistics (e.g., CPU usage, memory usage, version, etc.) of each of the downloadable network performance modules that are active and/or installed on the network device.

The network device sends the collected data to the NMS via the communication channel. The NMS may determine the performance of the network based on the collected data. In some examples, the NMS determines, based on the collected data, that an issue or anomaly is present within the network. Based at least in part on the determination that the issue or anomaly is present, the NMS performs an action to remediate the detected issue, such as generating a notification specifying the issue detected and/or a suggestion to remedy the issue, or automatically performing a remedial action (e.g., resetting the network device, changing the configuration of the network device, etc.).

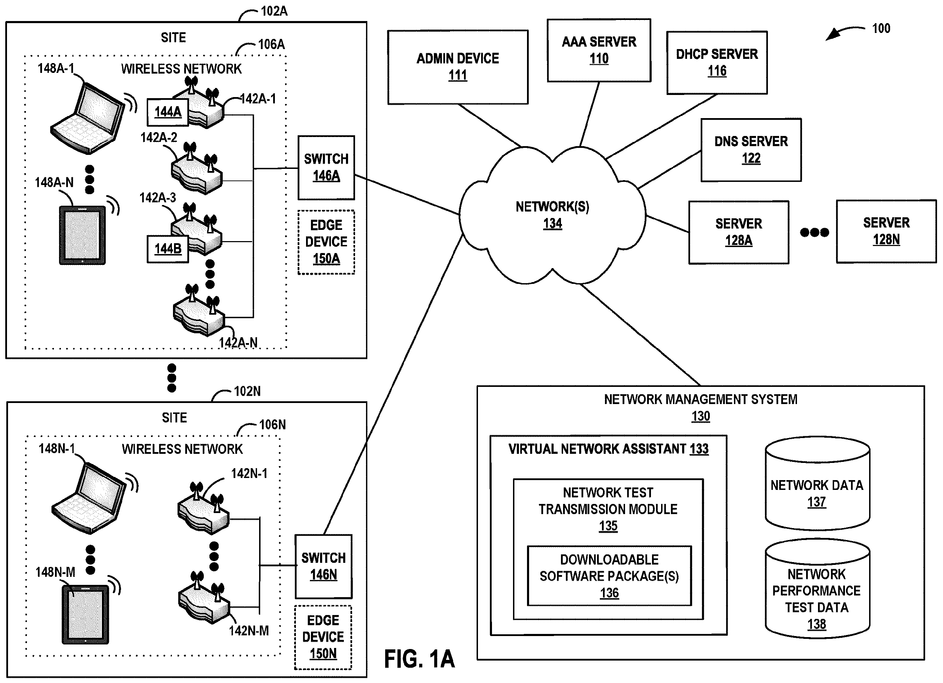

FIG. 1A is a block diagram of an example network system 100 configured to provide a downloadable software package to perform a testing function or other function to monitor the performance of a network, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site. References to "N" or "M" may represent any number. References to "N" for different elements need not be the same number. Similarly, references to "M" for different elements need not be the same number.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization, and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In accordance with one or more techniques of this disclosure, NMS 130 is configured to perform scheduling and/or orchestration of tests performed by devices of a site. In this example, VNA 133 of NMS 130 includes network test transmission module 135 that is configured to provide a software package to one or more devices, such as APs 142, to enable APs 142 to simulate a network instance and perform one or more network performance tests using the simulated network instance to obtain data indicative of a performance of the network instance. NMS 130 may receive the data indicative of a performance of the network instance from APs 142 for use in failure detection, troubleshooting and root cause analysis, and performing remedial actions upon network system 100, as described in more detail below.

In one example, network test transmission module 135 of VNA 133 of NMS 130 identifies a triggering event. In some examples, a triggering event may include a network event indicative of a potential issue that may require additional testing. For example, network test transmission module 135 may determine, based on network data of AP 142A-1 and/or one or more client devices or other network devices associated with AP 142A-1, a network anomaly that may require additional testing. In some examples, a triggering event may be based on a schedule to perform testing. In other examples, a triggering event may be an input received from admin device 111. Based at least in part on the identified triggering event, network test transmission module 135 selects a software package from a plurality of downloadable software packages 136. Each software package comprises a downloadable network performance monitoring module that includes, e.g., instructions for causing an AP 142 to perform a network performance monitoring function. For example, the software package may include instructions for causing an AP 142 to perform a network performance test by simulating a network instance. Network test transmission module 135 sends to AP 142A-1 (or AP 142A-1 obtains from network transmission module 135), the selected software package to cause AP 142A-1 to simulate the network instance to obtain data indicative of a performance of the network instance.

In this example, network test transmission module 135 stores the selected software package and sends the selected software module to an AP 142. In other examples, another device may store the selected software package, such as a server, a software package repository, a content delivery network, etc. In this situation, network test transmission module 135 may cause the AP 142 to obtain the selected software package from, e.g., a server or software package repository storing the selected software package.

AP 142A-1 obtains the software package comprising instructions for simulating a network instance and stores the software package. In some examples, AP 142A-1 optionally stores the software package in a volatile memory such that the software package is not retained upon power loss, restarting, or rebooting of AP 142A-1. In some examples, AP 142A-1 optionally stores the software package in a non-volatile memory such that the software package is retained after power loss, restarting, or rebooting of AP 142A-1.

AP 142A-1 simulates, based on the instructions specified by the software package, the network instance to obtain data indicative of a performance of the network instance. AP 142A-1 establishes a communication channel with NMS 130 based at least in part on configuration information for the communication channel specified by the software package. AP 142A-1 sends, via the established communication channel, the data indicative of the performance of the network instance to NMS 130.

NMS 130 receives, from AP 142A-1, the data indicative of the performance of the network instance via a communication channel established by the network device based on the selected software package. In some examples, VNA 133 of NMS 130 performs fault diagnosis, troubleshooting, or automatic fault remediation based at least in part on the received data indicative of the performance of the network instance. In some examples, VNA 133 performs traffic engineering, network path selection, or network traffic load balancing based at least in part on the received data indicative of the performance of the network instance.

Although the techniques of the present disclosure are described in this example as performed by an access point device (e.g., AP 142A-1), techniques described herein may be performed by any other device, such as any of client devices 148, switches 146, routers, or other devices.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

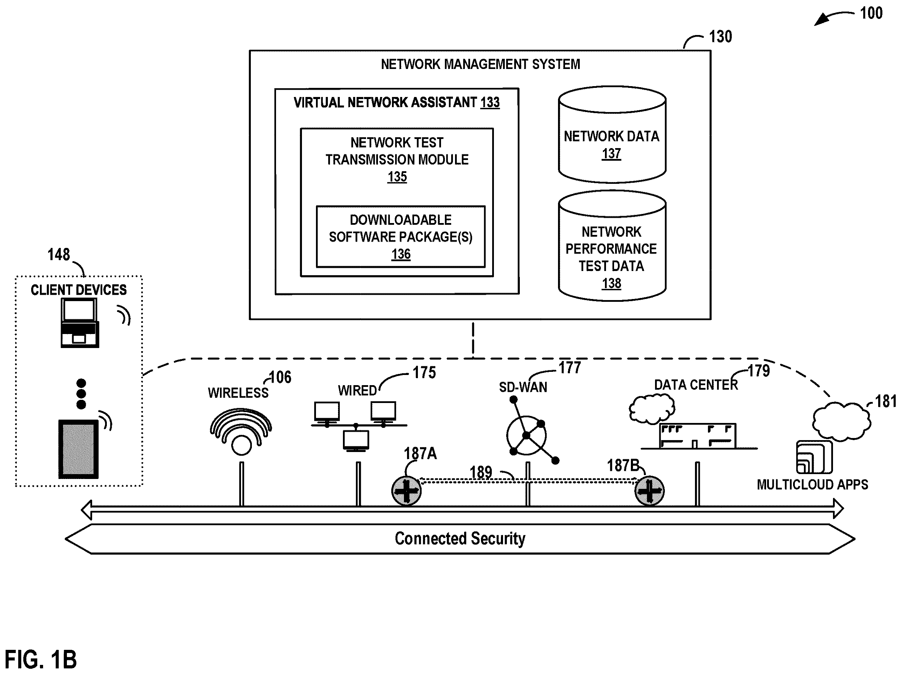

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with one or more techniques of this disclosure, NMS 130 is configured to perform scheduling and/or orchestration of tests performed by devices of a site. In this example, VNA 133 of NMS 130 includes network test transmission module 135 that is configured to provide a software package (e.g., one or more downloadable software packets 136) to one or more devices, such as client devices 148, NAS devices in wireless network 106 and/or wired network 175, or devices in SD-WAN 177, to enable the devices to simulate, based on the one or more downloadable software packages 136 provided by network test transmission module 135, a network instance and perform one or more network performance tests using the simulated network instance to obtain data indicative of a performance of the network instance. NMS 130 may receive the data indicative of a performance of the network instance from devices executing the one or more downloadable software packets 136 for use in failure detection, troubleshooting and root cause analysis, and performing remedial actions upon network system 100, as described in more detail below.

In one example, network test transmission module 135 of VNA 133 of NMS 130 identifies a triggering event that may be indicative of a potential issue that may require additional testing. For example, network test transmission module 135 may determine, based on network data associated with one of client devices 148, APs 142 of wireless network 106, or network devices of wired network 175 or SD-WAN 177, a network anomaly that may require additional testing. Based at least in part on the identified triggering event, network test transmission module 135 selects a software package from a plurality of downloadable software packages 136. Each software package comprises a downloadable network performance monitoring module that includes, e.g., instructions for causing a device (e.g., one of APs 142 of wireless network 106) to perform a network performance monitoring function. For example, the software package may include instructions for causing one of APs 142 of wireless network 106 to perform a network performance test by simulating a network instance. Network test transmission module 135 sends, to one of APs 142 of wireless network 106 , the selected software package to cause the AP 142 of wireless network 106 to simulate the network instance to obtain data indicative of a performance of the network instance.

One of APs 142 of wireless network 106 obtains the software package comprising instructions for simulating a network instance and stores the software package. In some examples, the AP 142 optionally stores the software package in a volatile memory such that the software package is not retained upon power loss, restarting, or rebooting of the AP 142. In some examples, the AP 142 optionally stores the software package in a non-volatile memory such that the software package is retained after power loss, restarting, or rebooting of the AP 142.

The AP 142 simulates, based on the instructions specified by the software package, the network instance to obtain data indicative of a performance of the network instance. The AP 142 establishes a communication channel with NMS 130 based at least in part on configuration information for the communication channel specified by the software package. The AP 142 sends, via the established communication channel, the data indicative of the performance of the network instance to NMS 130.

NMS 130 receives, from the AP 142, the data indicative of the performance of the network instance via a communication channel established by the network device based on the selected software package. In some examples, VNA 133 of NMS 130 performs fault diagnosis, troubleshooting, or automatic fault remediation based at least in part on the received data indicative of the performance of the network instance. In some examples, VNA 133 performs traffic engineering, network path selection, or network traffic load balancing based at least in part on the received data indicative of the performance of the network instance.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

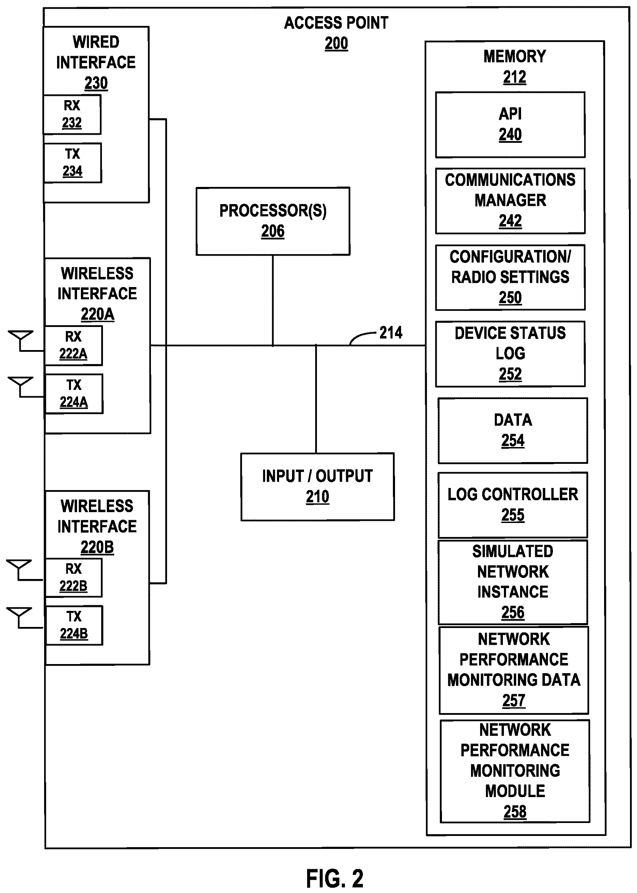

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

In accordance with the techniques described in this disclosure, AP device 200 obtains a software package enabling AP device 200 to perform a network performance test by simulating a network instance to obtain data indicative of a performance of the network instance without requiring AP device 200 to update its firmware or operating system, reboot, or restart. Therefore, AP device 200 may simulate a network instance to obtain data indicative of a performance of the network instance without adversely impacting the forwarding of network traffic by AP device 200. Furthermore, such techniques may avoid incurring additionally administrative overhead required to upgrade the firmware or operating system of a conventional AP to enable such a conventional AP to perform additional or new network performance monitoring functions for which the conventional AP is not currently programmed.

For example, in accordance with the techniques described herein, processors 206 obtain, via wired interface 230 or wireless interfaces 220, a software package from VNA 133 of NMS 130 of FIGS. 1A-1B. The software package comprises a downloadable network performance monitoring module 258 that includes, e.g., instructions for causing processors 206 to perform a network performance monitoring function. For example, network performance monitoring module 258 may include instructions for causing processors 206 to perform a network performance test by simulating a network instance to obtain data 257 indicative of a performance of the simulated network instance.

In some examples, the software package includes one or more of a network performance monitoring function or a network test to be performed by the simulated network instance, configuration data for a communication channel to be established with NMS 130 for transmitting the network performance monitoring data 257, a schedule to perform the network performance monitoring function or the network test, a Virtual Local Area Network (VLAN) to be used during performance the network performance monitoring function or the network test, or one or more resource requirements to be applied during performance the network performance monitoring function or the network test.

In some examples, the software package specifies a data format for network performance monitoring data 257. The data format may specify, for example, a name or an identifier of a network performance monitoring function or network test to be performed by the simulated network instance, one or more categories for network performance monitoring data 257, or fields for one or more of a value of latency, jitter, packet loss to be specified by the network performance monitoring data 257. In some examples, the data format specifies a JavaScript Object Notation (JSON) format, YAML format, XML format, CSV format, or other data format.

Processors 206 store network performance monitoring module 258 in memory 212. Typically, processors 206 execute firmware configured to perform one or more network functions of AP 200, the firmware stored in a non-volatile memory of memory 212. In some examples, processors 206 optionally store network performance monitoring module 258 in a volatile memory of memory 212 such that network performance monitoring module 258 is not retained upon power loss, restarting, or rebooting of AP 200. In some examples, processors 206 optionally store network performance monitoring module 258 in a non-volatile memory of memory 212 such that network performance monitoring module 258 is retained after power loss, restarting, or rebooting of AP 200.

Processors 206 simulate, based on the instructions specified by network performance monitoring module 258, a network instance to obtain data 257 indicative of a performance of the network instance. For example, network performance monitoring module 258 may cause processors 206 to execute simulated network instance 256 that simulates a network instance. For example, network performance monitoring module 258 may include configuration information for configuring simulated network instance 256. Such configuration information may include, e.g., a network performance monitoring function or a network test to be performed by the simulated network instance, configuration data for the communication channel, a data format for network performance monitoring data 257, a schedule to perform the network performance monitoring function or the network test, a VLAN to be used during performance the network performance monitoring function or the network test, or one or more resource requirements to be applied during performance the network performance monitoring function or the network test.

Processors 206 execute, based on network performance monitoring module 258, program instructions that cause AP device 200 to execute simulated network instance 256 to simulate a network instance. In some examples, processors 206 execute simulated network instance 256 to execute a synthetic client device that establishes a connection with a simulated network instance of AP device 200 and/or forwards network data to the simulated network instance. In some examples, processors 206 execute simulated network instance 256 to execute a synthetic server to which the simulated network instance forwards network data.

In some examples, to simulate the network instance, processors 206 simulate an operation of one or more client devices, such as client devices 148 of FIG. 1A-1B, accessing network 134 via AP 200. In some examples, processors 206 perform a network test upon simulated network instance 256 to obtain data 257 indicative of the performance of the network instance. For example, the network test may comprise a speed test. In this example, simulated network instance 256 performs a speed test by exchanging network traffic between simulated network instance 256 and a server and measuring at least one of an upload speed or a download speed of the network traffic.

As another example, the network test may comprise a ping message. In this example, simulated network instance 256 exchanges ping messages with a server and measuring one or more of an average Round Trip Time (RTT), a maximum RTT, a minimum RTT, a ping count, a ping interval, a ping request size, a ping domain, a packet loss percentage, a number of packets received, or a number of packets transmitted.

As another example, the network test may comprise an Authentication, Authorization, and Accounting (AAA) test. In this example, simulated network instance 256 attempts to initiate an AAA session with an AAA server, such as an off-network Network Admission Control (NAC) Remote Authentication Dial-In User Service (RADIUS) server, so as to obtain data useful in troubleshooting potential configuration issues with accessing the AAA server, whether those configuration issues may be due to a misconfigured AP 142, issues with the AAA server, or a misconfigured network policy, etc.

Processors 206 may monitor the traffic exchanged with the simulated network instance 256 to generate network performance monitoring data 257. The data 257 indicative of the performance of the network instance may include, e.g., metrics and/or performance-related information for the network instance, such as latency, jitter, packet loss, CPU usage, memory usage, or a version identifier of AP 200, virtual client function 256, and/or network performance monitoring module 258.

In some examples, processing circuitry 206 may simulate the network instance 256 to obtain network performance monitoring data 257 based at least in part on a triggering command. For example, processing circuitry 206 may simulate the network instance 256 in response to a triggering command received from a user, such as an administrator, or in response to a triggering command received from NMS 130 of FIGS. 1A-1B.

As described above, processors 206 may download and execute the network performance monitoring module 258 and simulate the network instance 256 while continuously exchanging network traffic or otherwise interrupting the ordinary forwarding of network traffic by AP 200. Additionally, in some examples, processors 206 may download and execute the network performance monitoring module 258 and simulate the network instance without requiring processors 206 to update firmware for AP 200 stored in a non-volatile memory of memory 212.

Processors 206 establish, via wired interface 230 or wireless interfaces 220, a communication channel with VNA 133 of FIGS. 1A-1B based at least in part on configuration information for the communication channel specified by the software package. Processors 206 send, via the established communication channel, network performance monitoring data 257 to NMS 130. For example, the software package may specify an interface 230, 220 with which to establish the communication channel with NMS 130, a network protocol to use for communicating via the communication channel, one or more network links with which to establish the communication channel with NMS 130, etc.

AP device 200 may send to an NMS (e.g., NMS 130 of FIG. 1A), or the NMS may retrieve from AP device 200, network performance monitoring data 257, and the NMS may perform an action based on network performance monitoring data 257 obtained from AP device 200, such as generating and sending a notification (e.g., for display on a display device of admin device 111 or as a message to an administrator) including an indication of the performance of the simulated network instance 256, and/or an indication of a root cause of failure of AP 200, such as an issue with the configuration of the network, configuration of the APs, or other issue that is causing an issue within the network, or perform a remedial action to mitigate or resolve issues of AP 200 or another AP within the network, such as configuring operation of AP device 200 or restarting AP device 200 to address the issue.

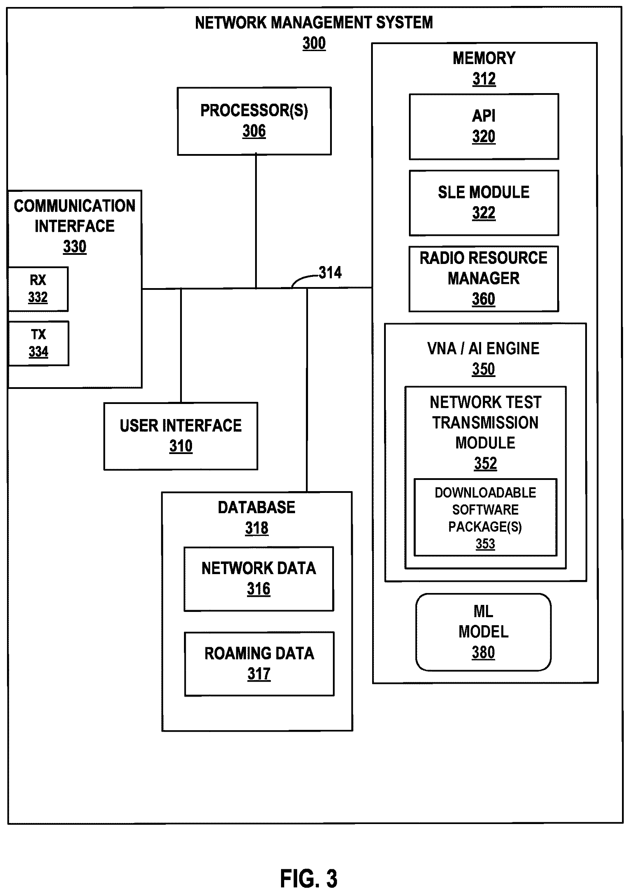

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1 through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In some examples, ML model 380 may comprise a supervised ML model that is trained, using training data comprising pre-collected, labeled network data received from network devices (e.g., client devices, APs, switches and/or other network nodes), to identify a synthetic test time window and/or synthetic test scope. The supervised ML model may comprise one of a logistical regression, naive Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

In accordance with one or more techniques of this disclosure, VNA 350 includes network test transmission module 352, which is configured to select a software package of downloadable software packages 353 for provisioning to one or more devices, such as APs 142, to enable APs 142 to simulate a network instance and perform one or more network performance tests using the simulated network instance to obtain data indicative of a performance of the network instance.

In one example, network test transmission module 352 of VNA 350 of NMS 300 identifies a triggering event associated with one of APs 142 managed by NMS 300. A triggering event may comprise any network event obtained from an analysis of any data collected and/or measured by any of the devices within network system 100. In one example, network test transmission module 352 of VNA 350 of NMS 3030 identifies a triggering event that may be indicative of a potential issue that may require additional testing. For example, network test transmission module 352 may determine, based on network data associated with one of client devices 148, APs 142 of wireless network 106, or network devices of wired network 175 or SD-WAN 177, a network anomaly that may require additional testing. For example, a triggering event may include a failure of a network device such as an AP 142 or a component of the network device, a degradation of performance of the AP 142 below a performance threshold such as an Service Level Agreement (SLA) requirement, a failure of a link over which the AP forwards traffic, input from a user, such as an administrator of NMS 300, or a message from a network device managed by VNA 350, such as AP 142, etc.

Based at least in part on the identified triggering event, network test transmission module 352 selects a software package from a plurality of downloadable software packages 353. In some examples, each of downloadable software packages 353 comprises a downloadable network performance monitoring module that includes, e.g., instructions for causing a network device, such as APs 142 of FIGS. 1A-1B, to perform a network performance monitoring function. For example, the network performance monitoring module may include instructions for causing a network device to perform a network performance test by simulating a network instance to obtain data indicative of a performance of the simulated network instance.

In some examples, the triggering event may indicate a particular fault or type of data to be obtained. In such an example, network test transmission module 352 selects a software package suitable to diagnose the particular cause of fault associated with the AP 142. For example, where the triggering event indicates a particular type of fault with the AP 142, network test transmission module 352 selects a software package for causing the AP 142 to perform a network performance test to obtain data for use in diagnosing a root cause of the particular fault or to perform a remediative action for remedying the particular fault. For example, where the triggering event indicates that a configuration of the AP 142 may be incorrect, network test transmission module 352 selects a software package for causing the AP 142 to perform a network performance test by simulating a network instance with the configuration parameters in question so as to obtain data indicative of a performance of the simulated network instance with the corresponding configuration parameters.

As another example, where the triggering event indicates that network performance data is to be obtained, network test transmission module 352 selects a software package for causing the AP 142 to perform a speed test by simulating a network instance that uses a second link to forward traffic so as to obtain data indicative of a performance of the simulated network instance using the second link.

As another example, where the triggering event indicates that network performance data is to be obtained, network test transmission module 352 selects a software package for causing the AP 142 to perform a speed test by simulating a network instance that performs a speed test by exchanging network traffic between the simulated network instance and a server and measuring at least one of an upload speed or a download speed of the network traffic. In this example, the data indicative of the performance of the simulated network instance may include an average, median, or maximum upload speed or download speed of the network traffic.

As another example, where the triggering event indicates that network performance data is to be obtained, network test transmission module 352 selects a software package for causing the AP 142 to perform a ping test by simulating a network instance that exchanges ping messages with a server and measures performance metrics related to the ping messages. In this example, the data indicative of the performance of the simulated network instance may include an average Round Trip Time (RTT), a maximum RTT, a minimum RTT, a ping count, a ping interval, a ping request size, a ping domain, a packet loss percentage, a number of packets received, or a number of packets transmitted.

As another example, where the triggering event indicates that an Authentication, Authorization, and Accounting (AAA) server, such as an off-network Network Admission Control (NAC) Remote Authentication Dial-In User Service (RADIUS) server, has failed, network test transmission module 352 selects a software package for causing the AP 142 to perform a network performance test by simulating a network instance that attempts to initiate an AAA session with the AAA server so as to obtain data useful in troubleshooting potential configuration issues with accessing the AAA server, whether those configuration issues may be due to a misconfigured AP 142, issues with the AAA server, or a misconfigured network policy, etc.

In some examples, the triggering event may not indicate a particular fault or type of data to be obtained. In such an example, network test transmission module 352 may select a software package for causing the AP 142 to perform a default network performance test by simulating a network instance so as to obtain multiple types of data indicative of a performance of the simulated network instance that may be useful, e.g., for traffic engineering, failure analysis and root cause identification, fault remediation, network optimization, etc.

In some examples, each of downloadable software packages 353 includes one or more of a network performance monitoring function or a network test to be performed by the simulated network instance, configuration data for a communication channel to be established with NMS 130 for transmitting network performance monitoring data, a schedule to perform the network performance monitoring function or the network test, a Virtual Local Area Network (VLAN) to be used during performance the network performance monitoring function or the network test, or one or more resource requirements to be applied during performance the network performance monitoring function or the network test.

In some examples, each of downloadable software packages 353 specifies a data format for the network performance monitoring data. The data format may specify, for example, a name or an identifier of a network performance monitoring function or network test to be performed by the simulated network instance, one or more categories for the network performance monitoring data, or fields for one or more of a value of latency, jitter, packet loss to be specified by the network performance monitoring data. In some examples, the data format specifies a JavaScript Object Notation (JSON) format, a YAML format, an XML format, a CSV format, or other data format.

In some examples, each of downloadable software packages 353 specifies instructions for simulating an operation of one or more client devices, such as client devices 148 of FIG. 1A-1B, accessing network 134 via AP 200. In some examples, each of downloadable software packages 353 specifies instructions for performing a network test upon a simulated network instance to obtain data indicative of the performance of the network instance. For example, the network test may comprise a speed test and the instructions may cause the simulated network instance to perform a speed test by exchanging network traffic between simulated network instance and a server and measuring at least one of an upload speed or a download speed of the network traffic. As another example, the network test may comprise a ping message and the instructions may cause the simulated network instance to exchange ping messages with a server and measuring one or more of an average RTT, a maximum RTT, a minimum RTT, a ping count, a ping interval, a ping request size, a ping domain, a packet loss percentage, a number of packets received, or a number of packets transmitted.

In this example, network test transmission module 135 stores downloadable software packages 353 and sends the selected downloadable software packages 353 to an AP 142. In other examples, another device may store the selected software package, such as a server, a software package repository, a content delivery network, etc. In this situation, network test transmission module 135 may cause the AP 142 to obtain the selected downloadable software packages 353 from, e.g., a server or software package repository storing downloadable software packages 353. For example, network test transmission module 135 may send, to the AP 142, information specifying an URL, link, or location where AP 142 may obtain the selected downloadable software package 353.

Network test transmission module 135 sends, to an AP 142, the selected software package to cause the AP 142 to simulate the network instance to obtain data indicative of a performance of the network instance. NMS 130 receives, from the AP 142, the data indicative of the performance of the network instance via a communication channel established by the network device based on the selected software package. In some examples, the data indicative of the performance of the network instance comprises values for one or more of latency, jitter, packet loss, CPU usage, memory usage, or a version identifier obtained during simulation of the network instance.

In some examples, VNA 350 performs fault diagnosis, troubleshooting, or automatic fault remediation based at least in part on the received data indicative of the performance of the network instance. For example, VNA 350 may use the data indicative of the performance of the network instance to determine a determine a root cause of a failure of a network device, such as the AP 142 from which the data was received. As another example, VNA 350 may use the data indicative of the performance of the network instance to determine a determine a root cause of a failure of another network device for which VNA 350 is unable to communicate, such as a failed peer of the AP 142 from which the data was received. Based on the determined root cause of failure, VNA 350 may automatically perform a remedial action to remedy the failure of the network device. In some examples, VNA 350 performs traffic engineering, network path selection, or network traffic load balancing based at least in part on the received data indicative of the performance of the network instance.

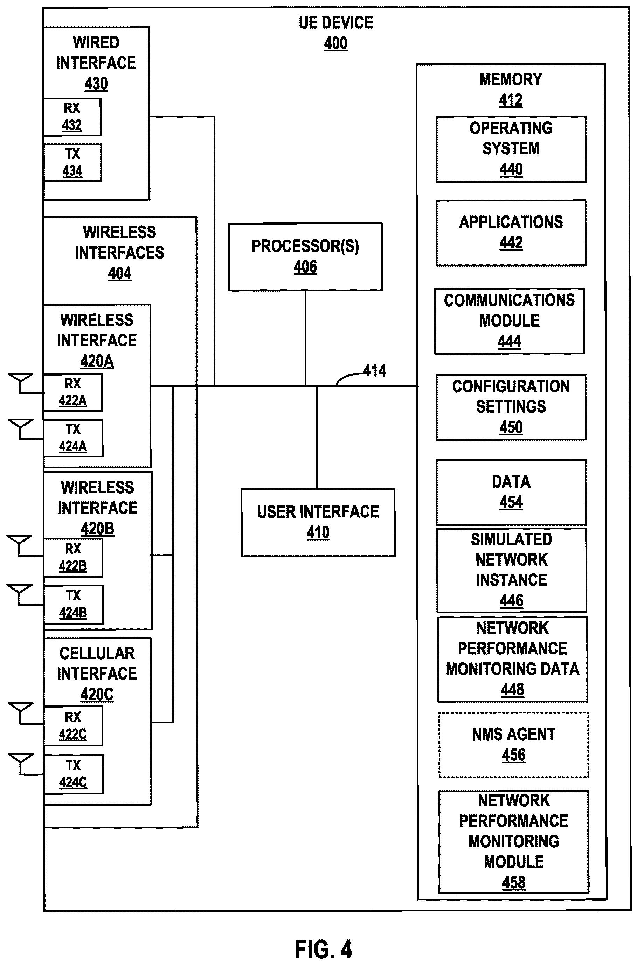

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

In accordance with the techniques described in this disclosure, UE device 400 obtains a software package comprising network performance monitoring module 458 enabling UE device 400 to perform a network performance test by simulating a network instance 446 to obtain data 448 indicative of a performance of the network instance without requiring UE device 400 to update its firmware or operating system, reboot, or restart. Therefore, UE device 400 may simulate a network instance 446 to obtain network performance monitoring data 448 without adversely impacting the forwarding of network traffic by UE device 400. Furthermore, such techniques may avoid incurring additionally administrative overhead required to upgrade the firmware or operating system of a conventional AP to enable such a conventional AP to perform additional or new network performance monitoring functions for which the conventional AP is not currently programmed.

For example, in accordance with the techniques described herein, processors 406 obtain, via wired interface 430 or wireless interfaces 420, a software package from VNA 133 of NMS 130 of FIGS. 1A-1B. The software package comprises a downloadable network performance monitoring module 458 that includes, e.g., instructions for causing processors 406 to perform a network performance monitoring function. For example, the software package may include instructions for causing processors 406 to perform a network performance test by simulating a network instance 446. Processors 406 store the software package. In some examples, processors 406 optionally store the software package in a volatile memory of memory 412 such that the software package is not retained upon power loss, restarting, or rebooting of UE device 400. In some examples, processors 406 optionally store the software package in a non-volatile memory of memory 412 such that the software package is retained after power loss, restarting, or rebooting of UE device 400.

Processors 406 simulate, based on the instructions specified by the software package, the network instance 446 to obtain data 448 indicative of a performance of the network instance. Processors 406 establish, via wired interface 430 or wireless interfaces 420, a communication channel with VNA 133 of FIGS. 1A-1B based at least in part on configuration information for the communication channel specified by the software package. Processors 406 send, via the established communication channel, the network performance monitoring data 448 to VNA 133.

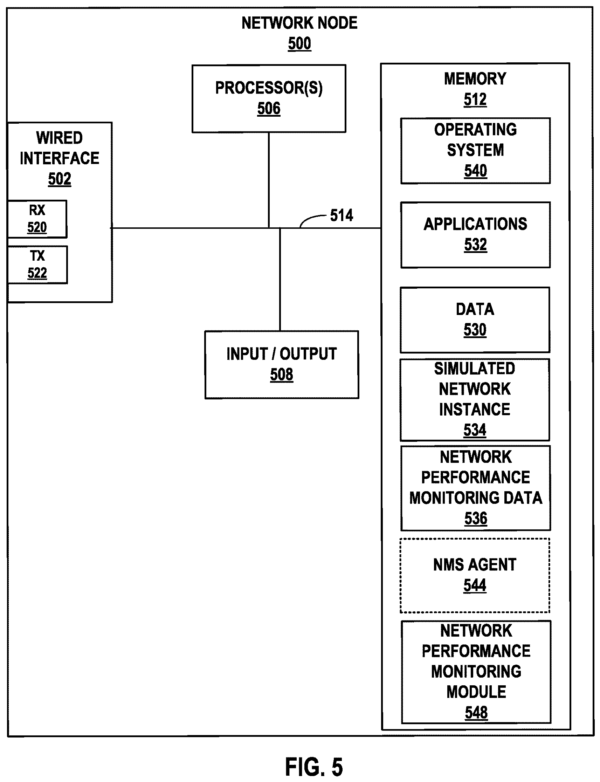

FIG. 5 is a block diagram illustrating an example network node 500, in accordance with one or more techniques of this disclosure. In one or more examples, the network node 500 implements a device or a server attached to the network 134 of FIG.1A, e.g., switches 146, AAA server 110 or other NAC servers or systems, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The network data collected and reported by network node 500 may include periodically reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

In accordance with the techniques described in this disclosure, network node 500 obtains a software package enabling network node 500 to perform a network performance test by simulating a network instance 534 to obtain data 536 indicative of a performance of the network instance 534 without requiring network node 500 to update its firmware or operating system, reboot, or restart. Therefore, network node 500 may simulate a network instance 534 to obtain data 536 without adversely impacting the forwarding of network traffic by network node 500. Furthermore, such techniques may avoid incurring additionally administrative overhead required to upgrade the firmware or operating system of a conventional AP to enable such a conventional AP to perform additional or new network performance monitoring functions for which the conventional AP is not currently programmed.

For example, in accordance with the techniques described herein, processors 506 obtain, via wired interface 502, a software package from VNA 133 of NMS 130 of FIGS. 1A-1B. The software package comprises a downloadable network performance monitoring module 548 that includes, e.g., instructions for causing processors 506 to perform a network performance monitoring function. For example, the software package may include instructions for causing processors 506 to perform a network performance test by simulating a network instance 534. Processors 506 store the software package. In some examples, processors 406 optionally store the software package in a volatile memory of memory 512 such that the software package is not retained upon power loss, restarting, or rebooting of network node 500. In some examples, processors 506 optionally store the software package in a non-volatile memory of memory 512 such that the software package is retained after power loss, restarting, or rebooting of network node 500.

Processors 506 simulate, based on the instructions specified by the software package, the network instance 534 to obtain data 536 indicative of a performance of the network instance. Processors 506 establish, via wired interface 502, a communication channel with VNA 133 of FIGS. 1A-1B based at least in part on configuration information for the communication channel specified by the software package. Processors 506 send, via the established communication channel, the data 536 indicative of the performance of the network instance to VNA 133.

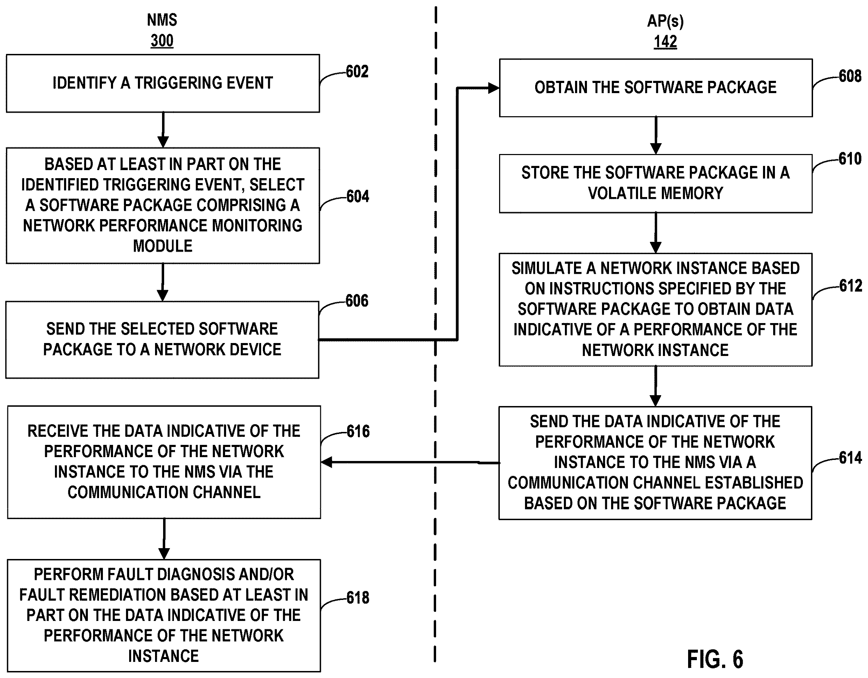

FIG. 6 is a flow chart illustrating an example operation of providing a downloadable software package to perform a testing function or other function to monitor the performance of a network, in accordance with one or more techniques of this disclosure. FIG. 6 is described with respect to network test transmission module 135 of NMS 130 of FIGS. 1A and 1B, and network test transmission module 352 of NMS 300 of FIGS. 3A, 3B.

In accordance with one or more techniques of this disclosure, NMS 130 is configured to perform scheduling and/or orchestration of tests performed by devices of a site. In this example, VNA 133 of NMS 130 includes network test transmission module 135 that is configured to provide a software package to one or more devices, such as APs 142, to enable APs 142 to simulate a network instance and perform one or more network performance tests using the simulated network instance to obtain data indicative of a performance of the network instance. NMS 130 may receive the data indicative of a performance of the network instance from APs 142 for use in failure detection, troubleshooting and root cause analysis, and performing remedial actions upon network system 100, as described in more detail below.

As depicted in the example of FIG. 6, network test transmission module 135 of VNA 133 of NMS 130 identifies a triggering event associated with one of APs 142 managed by NMS 130, such as AP 142A-1 (602). Based at least in part on the identified triggering event, network test transmission module 135 selects a software package from a plurality of downloadable software packages 136 (604). Each software package comprises a downloadable network performance monitoring module that includes, e.g., instructions for causing an AP 142 to perform a network performance monitoring function. For example, the software package may include instructions for causing an AP 142 to perform a network performance test by simulating a network instance. Network test transmission module 135 sends, to AP 142A-1, the selected software package to cause AP 142A-1 to simulate the network instance to obtain data indicative of a performance of the network instance (606). Additionally or in the alternative, network test transmission module 135 may send, to AP 142A-1, information specifying a location from which AP 142A-1 may download or obtain the selected software package.

AP 142A-1 obtains the software package comprising instructions for simulating a network instance (608) and stores the software package. In some examples, AP 142A-1 optionally stores the software package in a volatile memory such that the software package is not retained upon power loss, restarting, or rebooting of AP 142A-1 (610). In some examples, AP 142A-1 optionally stores the software package in a non-volatile memory such that the software package is retained after power loss, restarting, or rebooting of AP 142A-1.

AP 142A-1 simulates, based on the instructions specified by the software package, the network instance to obtain data indicative of a performance of the network instance (612). AP 142A-1 establishes a communication channel with VNA 133 based at least in part on configuration information for the communication channel specified by the software package. AP 142A-1 sends, via the established communication channel, the data indicative of the performance of the network instance to NMS 130 (614).

NMS 130 receives, from AP 142A-1, the data indicative of the performance of the network instance via a communication channel established by the network device based on the selected software package (616). In some examples, VNA 133 of NMS 130 performs fault diagnosis, troubleshooting, or automatic fault remediation based at least in part on the received data indicative of the performance of the network instance (618). In some examples, VNA 133 performs traffic engineering, network path selection, or network traffic load balancing based at least in part on the received data indicative of the performance of the network instance.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

Thus, from one perspective, there have now been described techniques for sending downloadable software packages that may be executed to perform tests of a network device without requiring the network device to update firmware. In one example, the network device obtains a software package comprising instructions for simulating a network instance and stores the software package in a volatile memory of the network device. The network device simulates, based on the instructions, the network instance to obtain data indicative of a performance of the network instance. The network device sends, via a communication channel established with a network management system (NMS) based on the software package, the data indicative of the performance of the network instance. In some examples, the NMS uses the data indicative of the performance of the network instance to identify a root cause of a failure of the network device or a remedial action to be performed upon the network device.

The following examples may illustrate one or more aspects of the disclosure.

Example A1. A network device comprising: a volatile memory; and processing circuitry in communication with storage media, the processing circuity configured to: obtain a software package comprising instructions for simulating a network instance; store the software package in the volatile memory; simulate, based on the instructions specified by the software package, the network instance to obtain data indicative of a performance of the network instance; and send, via a communication channel established with a network management system (NMS) based on the software package, the data indicative of the performance of the network instance.

Example A2. The network device of example A1, wherein the processing circuitry is further configured to execute firmware configured to perform one or more network functions of the network device, the firmware stored in a non-volatile memory of the network device; and wherein the processing circuitry is configured to obtain the software package and simulate, based on the instructions specified by the software package, the network instance to obtain data indicative of the performance of the network instance without updating the firmware stored in the non-volatile memory.

Example A3. The network device of any of examples A1 through A2, wherein the processing circuitry is further configured to forward network traffic; and wherein the processing circuitry is configured to obtain the software package and simulate, based on the instructions specified by the software package, the network instance to obtain data indicative of the performance of the network instance without interrupting the forwarding of the network traffic.

Example A4. The network device of any of examples A1 through A3, wherein to simulate the network instance to obtain the data indicative of the performance of the network instance, the processing circuitry is configured to simulate an operation of one or more client devices accessing a network via the network device.

Example A5. The network device of any of examples A1 through A4, wherein to simulate the network instance to obtain the data indicative of the performance of the network instance, the processing circuitry is configured to perform a network test upon the simulated network instance to obtain the data indicative of the performance of the network instance.

Example A6. The network device of any of examples A1 through A5, wherein to simulate the network instance to obtain the data indicative of the performance of the network instance, the processing circuitry is configured to perform at least one of: simulating a speed test by exchanging network traffic between the network instance and a server and measuring at least one of an upload speed or a download speed of the network traffic; or simulating a ping test by exchanging a ping message between the network instance and the server and measuring one or more of an average Round Trip Time (RTT), a maximum RTT, a minimum RTT, a ping count, a ping interval, a ping request size, a ping domain, a packet loss percentage, a number of packets received, or a number of packets transmitted.

Example A7. The network device of any of examples A1 through A4, wherein to simulate the network instance to obtain the data indicative of the performance of the network instance, the processing circuitry is configured to cause the network instance to initiate an Authentication, Authorization, and Accounting (AAA) session with a AAA server.

Example A8. The network device of any of examples A1 through A7, wherein the processing circuitry is configured to obtain the software package from the NMS.

Example A9. The network device of any of examples A1 through A8, wherein the software package includes one or more of: a network performance monitoring function or a network test to be performed by the simulated network instance; configuration data for the communication channel; a data format for the data indicative of the performance of the network instance; or a schedule to perform the network performance monitoring function or the network test; a Virtual Local Area Network (VLAN) to be used during performance the network performance monitoring function or the network test; or one or more resource requirements to be applied during performance the network performance monitoring function or the network test.

Example A10. The network device of example A9, wherein the data format specifies one or more of: a name or an identifier of a network performance monitoring function or network test to be performed by the simulated network instance; one or more categories for the data indicative of the performance of the network instance; or one or more of a value of latency, jitter, packet loss specified by the data indicative of the performance of the network instance.

Example A11. The network device of any of examples A1 through A10, wherein the processing circuitry is configured to simulate the network instance to obtain the data indicative of the performance of the network instance based at least in part on a triggering command received from a user.

Example A12. The network device of any of examples A1 through A11, wherein the data indicative of the performance of the network instance comprises one or more of latency, jitter, packet loss, CPU usage, memory usage, or a version identifier.

Example A13. A method as performed by the network device of examples A1-A12.

Example A14. Non-transitory, computer-readable media comprising instructions that, when executed, are configured to cause processing circuitry to perform the operations of any of examples A1-A12.

Example B1. A network management system (NMS) comprising: processing circuitry in communication with storage media, the processing circuity configured to: identify a triggering event associated with a network device of a plurality of network devices managed by the network management system; based at least in part on the identified triggering event, select a software package from a plurality of software packages, the selected software package comprising instructions for simulating a network instance; and send, to the network device, the selected software package to cause the network device to simulate the network instance to obtain data indicative of a performance of the network instance.

Example B2. The NMS of example B 1, wherein the processing circuitry is further configured to: receive, from the network device, the data indicative of the performance of the network instance via a communication channel established by the network device based on the selected software package.

Example B3. The NMS of any of examples B1 through B2, wherein the triggering event comprises at least one of: a failure of at least one network device of the plurality of network devices; a degradation of performance of the at least one network device of the plurality of network devices; an input from a user; or a message from the network device.

Example B4. The NMS of any of examples B1 through B3, wherein the processing circuitry is further configured to determine a root cause of a failure of at least one network device of the plurality of network devices based at least in part on the data indicative of the performance of the network instance.

Example B5. The NMS of any of examples B2 through B3, wherein the processing circuitry is further configured to perform a remedial action to remedy a failure of at least one network device of the plurality of network devices based at least in part on the data indicative of the performance of the network instance.

Example B6. The NMS of any of examples B1 through B5, wherein the instructions for simulating the network instance comprise for one or more of: instructions for simulating an operation of one or more client devices accessing a network via the network device; instructions for performing a network test upon the simulated network instance; instructions for simulating a speed test by exchanging network traffic between the network instance and a server and measuring at least one of an upload speed or a download speed of the network traffic; instructions for simulating a ping test by exchanging a ping message between the network instance and the server and measuring one or more of an average Round Trip Time (RTT), a maximum RTT, a minimum RTT, a ping count, a ping interval, a ping request size, a ping domain, a packet loss percentage, a number of packets received, or a number of packets transmitted; or instructions for causing the network instance to initiate an Authentication, Authorization, and Accounting (AAA) session with a AAA server.

Example B7. The NMS of any of examples B1 through B6, wherein the software package includes one or more of: a network performance monitoring function or a network test to be performed by the simulated network instance; configuration data for a communication channel to be established by the network device for exchanging the data indicative of the performance of the network instance; a data format for the data indicative of the performance of the network instance; or a schedule to perform the network performance monitoring function or the network test; a Virtual Local Area Network (VLAN) to be used during performance the network performance monitoring function or the network test; or one or more resource requirements to be applied during performance the network performance monitoring function or the network test.

Example B8. The NMS of example B7, wherein the data format specifies one or more of: a name or an identifier of a network performance monitoring function or network test to be performed by the simulated network instance; one or more categories for the data indicative of the performance of the network instance; or one or more of a value of latency, jitter, packet loss specified by the data indicative of the performance of the network instance.

Example B9. The NMS of any of examples B1 through B8, wherein the data indicative of the performance of the network instance comprises one or more of latency, jitter, packet loss, CPU usage, memory usage, or a version identifier.

Example B10. A method as performed by the network management system of examples B1-B9.

Example B11. Non-transitory, computer-readable media comprising instructions that, when executed, are configured to cause processing circuitry to perform the operations of any of examples B1-B9.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. Additionally, or alternatively, a computer-readable medium can include transient media such as carrier waves and transmission media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Further examples of feature combinations taught by the present disclosure are set out in the following numbered clauses:
1. A network device comprising:
   a volatile memory; and
   processing circuitry in communication with storage media, the processing circuity configured to:
      obtain a software package comprising instructions for simulating a network instance;
      store the software package in the volatile memory;
      simulate, based on the instructions specified by the software package, the network instance to obtain data indicative of a performance of the network instance; and
      send, via a communication channel established with a network management system (NMS) based on the software package, the data indicative of the performance of the network instance.
2. The network device of clause 1,
   wherein the processing circuitry is further configured to execute firmware configured to perform one or more network functions of the network device, the firmware stored in a non-volatile memory of the network device, and
   wherein the processing circuitry is configured to obtain the software package and simulate, based on the instructions specified by the software package, the network instance to obtain data indicative of the performance of the network instance without updating the firmware stored in the non-volatile memory.
3. The network device of clause 1 or clause 2,
   wherein the processing circuitry is further configured to forward network traffic; and
   wherein the processing circuitry is configured to obtain the software package and simulate, based on the instructions specified by the software package, the network instance to obtain data indicative of the performance of the network instance without interrupting the forwarding of the network traffic.
4. The network device of any preceding clause, wherein to simulate the network instance to obtain the data indicative of the performance of the network instance, the processing circuitry is configured to simulate an operation of one or more client devices accessing a network via the network device.
5. The network device of any preceding clause, wherein to simulate the network instance to obtain the data indicative of the performance of the network instance, the processing circuitry is configured to perform a network test upon the simulated network instance to obtain the data indicative of the performance of the network instance.
6. The network device of any preceding clause, wherein to simulate the network instance to obtain the data indicative of the performance of the network instance, the processing circuitry is configured to perform at least one of:
   simulating a speed test by exchanging network traffic between the network instance and a server and measuring at least one of an upload speed or a download speed of the network traffic; or
   simulating a ping test by exchanging a ping message between the network instance and the server and measuring one or more of an average Round Trip Time (RTT), a maximum RTT, a minimum RTT, a ping count, a ping interval, a ping request size, a ping domain, a packet loss percentage, a number of packets received, or a number of packets transmitted.
7. The network device of any preceding clause, wherein to simulate the network instance to obtain the data indicative of the performance of the network instance, the processing circuitry is configured to cause the network instance to initiate an Authentication, Authorization, and Accounting (AAA) session with an AAA server.
8. The network device of any preceding clause, wherein the processing circuitry is configured to obtain the software package from the NMS.
9. The network device of any preceding clause, wherein the software package includes one or more of:
   a network performance monitoring function or a network test to be performed by the simulated network instance;
   configuration data for the communication channel;
   a data format for the data indicative of the performance of the network instance;
   a schedule to perform the network performance monitoring function or the network test;
   a Virtual Local Area Network (VLAN) to be used during performance the network performance monitoring function or the network test; or
   one or more resource requirements to be applied during performance the network performance monitoring function or the network test.
10. The network device of any preceding clause, wherein the data format specifies one or more of:
   a name or an identifier of the network performance monitoring function or the network test to be performed by the simulated network instance;
   one or more categories for the data indicative of the performance of the network instance; or
   one or more of a value of latency, jitter, packet loss specified by the data indicative of the performance of the network instance.
11. The network device of any preceding clause, wherein the processing circuitry is configured to simulate the network instance to obtain the data indicative of the performance of the network instance based at least in part on a triggering command received from a user.
12. The network device of any preceding clause, wherein the data indicative of the performance of the network instance comprises one or more of latency, jitter, packet loss, CPU usage, memory usage, or a version identifier.
13. A method comprising:
   obtaining, by a network device, a software package comprising instructions for simulating a network instance;
   storing, by the network device, the software package in a volatile memory of the network device;
   simulating, by the network device and based on the instructions specified by the software package, the network instance to obtain data indicative of a performance of the network instance; and
   sending, by the network device and via a communication channel established with a network management system (NMS) based on the software package, the data indicative of the performance of the network instance.
14. The method of clause 13, further comprising:
   executing, by the network device, firmware configured to perform one or more network functions of the network device, the firmware stored in a non-volatile memory of the network device,
   wherein obtaining the software package and simulating, based on the instructions specified by the software package, the network instance to obtain the data indicative of the performance of the network instance are performed without updating the firmware stored in the non-volatile memory.
15. The method of clause 13 or clause 14,
   wherein the method further comprises forwarding, by the network device, network traffic, and
   wherein obtaining the software package and simulating, based on the instructions specified by the software package, the network instance to obtain the data indicative of the performance of the network instance are performed without interrupting the forwarding of the network traffic.
16. The method of any of clauses 13 to 15, wherein simulating the network instance to obtain the data indicative of the performance of the network instance comprises simulating an operation of one or more client devices accessing a network via the network device.
17. The method of any of clauses 13 to 16, wherein simulating the network instance to obtain the data indicative of the performance of the network instance comprises performing a network test upon the simulated network instance to obtain the data indicative of the performance of the network instance.
18. The method of any of clauses 13 to 17, wherein simulating the network instance to obtain the data indicative of the performance of the network instance comprises at least one of:
   simulating a speed test by exchanging network traffic between the network instance and a server and measuring at least one of an upload speed or a download speed of the network traffic; or
   simulating a ping test by exchanging a ping message between the network instance and the server and measuring one or more of an average Round Trip Time (RTT), a maximum RTT, a minimum RTT, a ping count, a ping interval, a ping request size, a ping domain, a packet loss percentage, a number of packets received, or a number of packets transmitted.
19. The method of any of clauses 13 to 18, wherein simulating the network instance to obtain the data indicative of the performance of the network instance comprises causing the network instance to initiate an Authentication, Authorization, and Accounting (AAA) session with an AAA server.
20. A computer-readable media comprising instructions that, when executed, cause processing circuitry of a network device to:
   obtain a software package comprising instructions for simulating a network instance;
   store the software package in a volatile memory of the network device;
   simulate, based on the instructions specified by the software package, the network instance to obtain data indicative of a performance of the network instance; and
   send, via a communication channel established with a network management system (NMS) based on the software package, the data indicative of the performance of the network instance.

## Claims

1. A network device comprising:
a volatile memory; and
processing circuitry in communication with storage media, the processing circuity configured to:
obtain a software package comprising instructions for simulating a network instance;
store the software package in the volatile memory;
simulate, based on the instructions specified by the software package, the network instance to obtain data indicative of a performance of the network instance; and
send, via a communication channel established with a network management system, NMS, based on the software package, the data indicative of the performance of the network instance.

2. The network device of claim 1,
wherein the processing circuitry is further configured to execute firmware configured to perform one or more network functions of the network device, the firmware stored in a non-volatile memory of the network device, and
wherein the processing circuitry is configured to obtain the software package and simulate, based on the instructions specified by the software package, the network instance to obtain data indicative of the performance of the network instance without updating the firmware stored in the non-volatile memory.

3. The network device of any of claims 1-2,
wherein the processing circuitry is further configured to forward network traffic; and
wherein the processing circuitry is configured to obtain the software package and simulate, based on the instructions specified by the software package, the network instance to obtain data indicative of the performance of the network instance without interrupting the forwarding of the network traffic.

4. The network device of any of claims 1-3, wherein to simulate the network instance to obtain the data indicative of the performance of the network instance, the processing circuitry is configured to simulate an operation of one or more client devices accessing a network via the network device.

5. The network device of any of claims 1-4, wherein to simulate the network instance to obtain the data indicative of the performance of the network instance, the processing circuitry is configured to perform a network test upon the simulated network instance to obtain the data indicative of the performance of the network instance.

6. The network device of any of claims 1-5, wherein to simulate the network instance to obtain the data indicative of the performance of the network instance, the processing circuitry is configured to perform at least one of:
simulating a speed test by exchanging network traffic between the network instance and a server and measuring at least one of an upload speed or a download speed of the network traffic; or
simulating a ping test by exchanging a ping message between the network instance and the server and measuring one or more of an average Round Trip Time, RTT, a maximum RTT, a minimum RTT, a ping count, a ping interval, a ping request size, a ping domain, a packet loss percentage, a number of packets received, or a number of packets transmitted.

7. The network device of any of claims 1-6, wherein to simulate the network instance to obtain the data indicative of the performance of the network instance, the processing circuitry is configured to cause the network instance to initiate an Authentication, Authorization, and Accounting, AAA, session with an AAA server.

8. The network device of any of claims 1-7, wherein the processing circuitry is configured to obtain the software package from the NMS.

9. The network device of any of claims 1-8, wherein the software package includes one or more of:
a network performance monitoring function or a network test to be performed by the simulated network instance;
configuration data for the communication channel;
a data format for the data indicative of the performance of the network instance;
a schedule to perform the network performance monitoring function or the network test;
a Virtual Local Area Network, VLAN, to be used during performance the network performance monitoring function or the network test; or
one or more resource requirements to be applied during performance the network performance monitoring function or the network test.

10. The network device of claim 9, wherein the data format specifies one or more of:
a name or an identifier of the network performance monitoring function or the network test to be performed by the simulated network instance;
one or more categories for the data indicative of the performance of the network instance; or
one or more of a value of latency, jitter, packet loss specified by the data indicative of the performance of the network instance.

11. The network device of any of claims 1-10, wherein the processing circuitry is configured to simulate the network instance to obtain the data indicative of the performance of the network instance based at least in part on a triggering command received from a user.

12. The network device of any of claims 1-11, wherein the data indicative of the performance of the network instance comprises one or more of latency, jitter, packet loss, CPU usage, memory usage, or a version identifier.

13. A method comprising:
obtaining, by a network device, a software package comprising instructions for simulating a network instance;
storing, by the network device, the software package in a volatile memory of the network device;
simulating, by the network device and based on the instructions specified by the software package, the network instance to obtain data indicative of a performance of the network instance; and
sending, by the network device and via a communication channel established with a network management system, NMS, based on the software package, the data indicative of the performance of the network instance.

14. The method of claim 13, further comprising steps corresponding to the functionality recited in any of claims 2-12.

15. Computer-readable storage media comprising instructions that, when executed by one or more programmable processors, cause the one or more programmable processors to become configured to carry out the method of any of claims 13-14.
